# EUROPÄISCHE PATENTSCHRIFT

(11) **EP 1 626 206 B1**
(45) Veröffentlichungstag und Bekanntmachung des Hinweises auf die Patenterteilung: **27.10.2010**
(21) Anmeldenummer: 05016035.7
(22) Anmeldetag: 23.07.2005
(51) Int. Cl.: B60W 10/10, F16H 3/72, F16H 47/04

(54) **Leistungsverzweigungsgetriebe für Kraftfahrzeuge**
Torque split transmission for motor vehicles
Transmission à division de puissance pour véhicules automobiles

(30) Priorität: 10.08.2004 AT 13602004
(43) Veröffentlichungstag der Anmeldung: 15.02.2006
(73) Patentinhaber: hofer forschungs- und entwicklungs GmbH, 4451 Garsten (AT)
(72) Erfinder: Aitzetmüller, Heinz, 4817 St.Konrad (AT); Flachs, Reinhard, 4073 Wilhering (AT); Hofer, Johann Paul, 97447 Gerolzhofen (DE); Hofer, Markus, 4451 Garsten (AT); Stöckl, Dieter, 4400 Steyr (AT)
(74) Vertreter: Cremer & Cremer

(56) Entgegenhaltungen:
- EP-A- 0 564 003
- DE-A1- 2 724 965
- DE-A1- 10 021 760
- DE-A1- 10 248 400
- DE-A1- 10 358 114
- DE-A1- 19 905 447
- US-A- 3 132 533
- US-A- 3 306 129
- US-A- 3 918 325
- US-A- 3 988 949
- US-A1- 2003 060 318
- US-B1- 6 361 463

## Beschreibung

Die Erfindung bezieht sich auf ein Leistungsverzweigungsgetriebe für Kraftfahrzeuge nach dem Oberbegriff des Patentanspruchs 1.

Es ist ein hydromechanisches Getriebe bekannt, US 3,979,972, das nach Art eines Leistungsverzeigungsgetriebes ausgebildet ist und eine mit einer Brennkraftmaschine verbundene Eingangswelle und eine Ausgangswelle umfasst. Dabei sind in einem ersten Zweig zwischen Eingangswelle und Ausgangswelle Kupplungen und Planetengetriebe vorgesehen, wogegen in einem zweiten Zweig ein hydrostatischer Antrieb arbeitet, der mit Stirnradgetrieben in Wirkverbindung steht und zwei hintereinander liegende Pumpmotoren aufweist.

In der DE 199 54 894 A1 wird ein Leistungsverzweigungsgetriebe behandelt, das für Traktoren, rad- und kettengetriebene Arbeitsmaschinen und Nutzkraftwagen geeignet ist. Das Leistungsverzweigungsgetriebe besitzt einen mechanischen Zweig, einen hydrostatischen Zweig und ein oder mehrere Planetengetriebe, über die der mechanische Leistungsanteil und der hydrostatische Leistungsanteil wieder zusammengeführt werden.

Aus der DE 10128 853 A1 geht ein Kraftfahrzeug hervor, das einen Antriebsstrang mit einer Antriebseinheit, ein Getriebe und eine Kupplungseinrichtung zur Momentenübertragung zwischen der Antriebseinheit und dem Getriebe aufweist. Die Kupplungseinrichtung ist als Mehrfach-Kupplungseinrichtung, insbesondere Doppel-Kupplungseinrichtung, mit einer ersten Getriebeeingangswelle zugeordneten ersten Kupplungsanordnung und einer zweiten Getriebeeingangswelle zugeordneten zweiten Kupplungsanordnung ausgeführt.

Gemäß der DE 10128 853 A1 istin ein Kraftfahrzeug ein Antriebsstrang mit einer Brennkraftmaschine eingebaut, die mit einem Doppelkupplungsgetriebe oder Lastschaltgetriebe zusammenwirkt. Zwischen Brennkraftmaschine und vorstehendem Getriebe ist eine Doppelkupplung vorgesehen, von der aus sich eine Eingangswelle zu besagtem Getriebe erstreckt. An einer Vorgelegewelle des Getriebes ist eine Ausgangswelle vorgesehen, die Räder einer Hinterachse antreibt.

Die gattungsgemäße US 3,918,325 A (Patentinhaberin: Clark Equipment Company; Anmeldetag: 21.07.1974) beschreibt ein drehzahlveränderliches Getriebe mit zwei Übertragungswegen und mit zwei stufenlos einstellbaren Drehzahlbereichen und einem erweiterten, völlig unveränderlichen Leistungsausgangsbereich, wobei ein Übertragungsweg eine drehzahlveränderliche Vorrichtung umfasst.

Die DE 102 48 400 A1 (Anmelderin: ZF Friedrichshafen AG; Anmeldetag: 17.10.2002) betrifft ein leistungsverzweigtes, stufenloses Automatgetriebe für ein Kraftfahrzeug. In einem solchen Automatgetriebe sind drei Fahrbereiche vorgesehen, wobei zwei Fahrbereiche als leistungsverzweigte Bereiche ausgelegt sind, bei denen ein Teil der Antriebsleistung über das stufenlose Getriebe und ein zweiter Teil der Antriebsleistung formschlüssig-mechanisch auf die Abtriebswelle geleitet wird.

Die US 2003/ 060 318 A1 (Anmelderin: Jacto Ltd.; Prioritätstag: 27.09.2001) beschreibt ein stufenlos einstellbares Getriebe für ein selbstfahrendes Fahrzeug, insbesondere stufenlos einstellbares Leistungsverzweigungsgetriebe, welches insbesondere für frontangetriebene Fahrzeuge geeignet ist.

Die DE 100 21760 A1 (Anmelderin: ZF Friedrichshafen; Anmeldetag: 04.05.2000) offenbart ein stufenloses Getriebe für Kraftfahrzeuge, insbesondere für Arbeitsmaschinen. Das Getriebe besteht aus einem stufenlos regelbaren Leistungszweig mit einem Variator als Umschlingungsgetriebe und einem Planetensatz als Summiergetriebe. Eine Kupplung K1 übernimmt die Aufgabe, die Drehzahl des variablen Sonnenrades 16 und die Drehzahl des konstanten Planetenträgers auf die Getriebeausgangswelle 19 leiten zu können. Anhand ihrer Funktion wird die Kupplung K2 erklärt. Die im Zusammenhang mit dem Hohlrad 18 verbauten Kupplungen K1 und K2 sind für die Durchschaltung der unterschiedlichen Übersetzungen notwendig.

Die EP0 564 003 A1 (Anmelder: Jarchow; Prioritätstag: 30.11.1987) beschreibt ein stufenlos wirkendes hydrostatischmechanisches Lastschaltgetriebe. Von dem mehrwelligen Planetengetriebe stellen das Hohlrad einer ersten Planetenstufe und einer zweiten Planetenstufe sowie der Planetenradträger einer dritten Planetenstufe die Antriebswelle dar. Das Sonnenrad der ersten Planetenstufe steht mit einer Welle in Verbindung. Es bilden das Sonnenrad der zweiten Planetenstufe eine Anfahrwelle, das Hohlrad der dritten Planetenstufe eine schnell laufende Koppelwelle A für den 1. und 3. Gang und der Planetenradträger der ersten und zweiten Planetenstufen die langsam laufende Koppelwelle für den 2. und 4. Gang. Für den Anfahrgang und den 1. Gang werden dieselbe Nachschaltstufe und ferner für den 2. und 3. Gang dieselbe Nachschaltstufe benutzt.

Die DE 199 05 447 A1 (Anmelder: Meyerle; Prioritätstag: 09.02.1998) offenbart ein stufenloses Getriebe mit Leistungsverzweigung, das mehrere Schaltbereiche mit einem hydrostatischen oder mechanischen Wandler hat. Bei einer Ausführung mit mechanischem Wandler, insbesondere in Form eines Umschlingungsgetriebes und vorzugsweise formschlüssigen Bereichskupplungen, schlägt die Druckschrift eine Sicherheitseinrichtung vor, welche in ein Getriebeglied des stufenlosen Leistungszweiges eingeordnet ist. Während eines Bereichswechsels innerhalb der Schaltphase bewirkt die Sicherheitseinrichtung eine kurzzeitige Drehmoment-Unterbrechung oder Drehmoment-Absenkung mit bevorzugt gezielt dosierbarem Drehmomentverlauf an einem Getriebeglied, z. B. einer Triebwelle, des stufenlosen Wandlers.

Die US Re 33 126 (Erfinder: Wittke; Anmeldetag: 05.10.1988) konzentriert sich ausschließlich auf ein CVT-Getriebe. Wie eine Vorrichtung nach US Re 33126 genau zu betreiben ist, ist der Druckschrift nicht zu entnehmen. Es wird in der Druckschrift nur ganz allgemein von einem nicht dargestellten primären Antrieb gesprochen. Welcher Art der automotive Motor ist, kann der US Re 33 126 nicht entnommen werden.

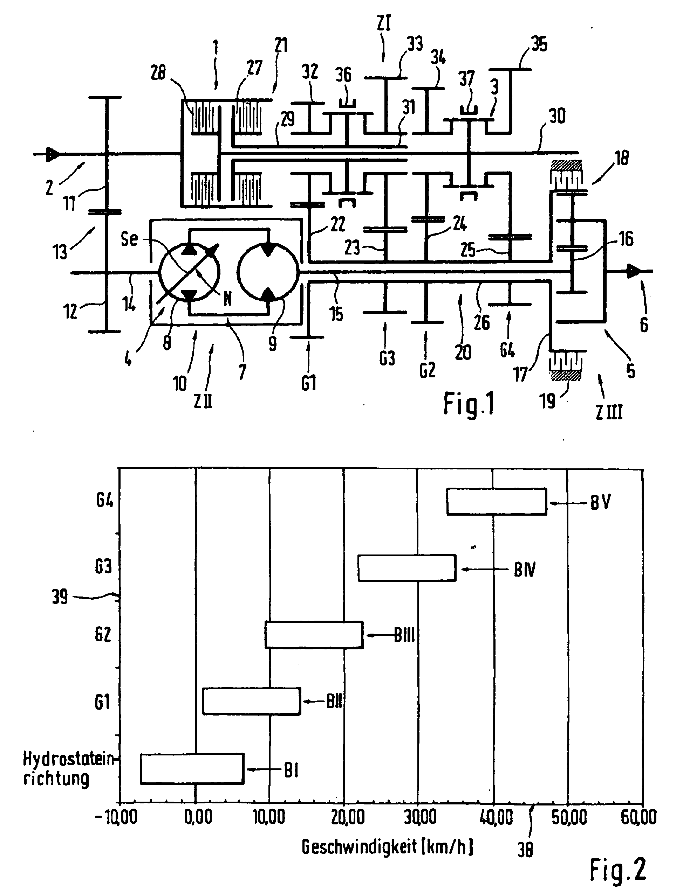

Die US 6,361,463 B1 (Patentinhaberin: Kanzaki Kokyukoki Mfg. Co. Ltd.; Prioritätstag: 17.05.1999) offenbart zwei Ausführungsbeispiele in den Figuren 1 und 9. Die hydraulische Steuerung der Ausführungsform nach Figur 1 lässt sich den Figuren 2, 3 und 6 entnehmen. Figur 6 zeigt die Öldruckverhältnisse in einer Leitung mit dem Bezugszeichen 77. Die Öldruckleitung 77 ist gemäß Figur 2 die Zuleitung zu den Schaltventilen 78a-78d. Bei den Kupplungen 43-46 handelt es sich um Wechselkupplungen, bei denen die zu öffnende Kupplung ihren Ölabfluss gedrosselt über die Drossel 91a erfährt. Eine Überblendmöglichkeit durch Ansteuerung der Magneten der unterschiedlichen Ventile dürfte bei einer Schaltungsrealisierung wie in der Druckschrift dargelegt nicht möglich sein. Folglich stellt die US 6,361,463 B1 ein Getriebe mit einem klassischen, mechanischen Wechselgetriebe vor.

Von den zahlreichen, unterschiedlichen Ausführungsbeispielen in der US Re 27 307 (Patentinhaberin: General Motors Corp; Anmeldetag: 28.02.1967) ist das Ausführungsbeispiel nach Figur am aufschlussreichsten. Figur 1 zeigt zwei Lamellenkupplungssysteme, die einmal als "high range dutch" und einmal als "low range brake" in Figur 1 betitelt sind. Die als "low range brake" betitelte Kupplung mit dem tassenartigen Teil 120 wird in ihrem mechanischen Aufbau näher beschrieben. Die Bremse für die Welle 86 bremst nicht nur die Antriebswelle des Sonnenrades 84, sondern mit Hilfe der Kupplung wird eine Bereichsumschaltung für das Getriebe, idealerweise im Verhältnis 1:2, bewerkstelligt. Bei Systemen nach vorliegender Erfindung jedoch werden, sowie jeweils in Zusammenschau der Figuren 1 und 2 bzw. 3 und 4 oder auch 4 und 5 für den Fachmann offensichtlich ist, die Bereiche durch die Schiebemuffenverschiebung der Schiebemuffen, dargestellt unterhalb der Bezugszeichen 36 und 37, ei n gestellt.

Abschließend sei auf die DE 199 50 696 A1 (Anmelderin: Volkswagen AG; Anmeldetag: 21.10.1999) verwiesen, die ein gängiges Doppelkupplungsgetriebes, das so gesteuert wird, dass eine Parkstandfunktion durch das gleichzeitige Schalten mehrerer Gänge umgesetzt wird, offenbart. Das in der DE 199 50 696 A1 gezeigte Getriebe hat jedoch mit einem Leistungsverzweigungsgetriebe gemäß der vorliegenden Erfindung nichts zu tun.

Es ist Aufgabe der Erfindung ein hochwirksames Lastschaltgetriebe für Kraftfahrzeuge zu schaffen, das vielfältige Anwendungsmöglichkeiten bietet und sich durch einfachen konstruktiven Getriebeaufbau auszeichnet.

Diese Aufgabe wird erfindungsgemäß durch die Merkmale des Patentanspruchs 1 gelöst. Weitere, die Erfindung ausgestaltende Merkmale sind in den Unteransprüchen bzw. Anspruch 18 enthalten, der ein Verfahren zum Betrieb eines Lastschaltgetriebes unter Schutz stellt.

Die mit der Erfindung hauptsächlich erzielten Vorteile sind darin zu sehen, dass ein stufenlos arbeitendes leicht herstellbares Leistungsverzweigungsgetriebe konzipiert ist, das mit zugkraftunterbrechungsfreier Veränderung der Getriebe-Übersetzung von maximaler Geschwindigkeit bei Rückwärtsfahrt bis zur maximalen Geschwindigkeit bei Vorwärtsfahrt arbeitet, wobei es möglich ist aus dem Stillstand anzufahren. Dabei ist genaues Positionieren und Rangieren des Kraftfahrzeugs durch den Steuerantrieb, vorzugsweise die Hydrostateinrichtung, sichergestellt. Auch kann die Größe der Hydrostateinrichtung primär durch die erforderlichen Zugkräfte und den zulässigen Differenzdruck der Hydrostateinrichtung bestimmt werden. Dank der Übersetzungen im Summierplanetengetriebe besteht die Möglichkeit das Verdrängungsvolumen im Konstantmotor der Hydrostateinrichtung relativ klein zu halten. Darüber hinaus wird ein vorzüglicher Getriebewirkungsgrad erzielt, und zwar durch geringe hydrostatische Leistungsanteile, insbesondere bei höheren Gängen und höheren Geschwindigkeiten. Darstellbar sind ferner erforderliche Getriebespreizungen mit beliebiger Anzahl von mechanischen Übersetzungsstufen. Schließlich ist in Verbindung mit der Hydrosteinrichtung auch noch eine Retarderfunktion verwirklichbar. Darüber hinaus ist das Leistungsverzweigungsgetriebe für Arbeitsmaschinen - Traktoren, Baumaschinen -, Handlingfahrzeugen - Telehandler, Stapler - und Fahrzeuge für Stop and Go Betrieb - Stadtbusse, Zustellfahrzeuge, Kommunalfahrzeuge - geeignet. Und schließlich kann besagtes Getriebe bei Personenkraftwagen und Nutzfahrzeugen eingesetzt werden, wo besondere Anforderungen bezüglich Fahr- und Bedienkomfort bestehen.

In den Zeichnungen werden Ausführungsbeispiele der Erfindung gezeigt, die nachstehend näher beschrieben sind.

Es zeigen
Fig. 1 einen schematischen Längsschnitt durch eine erste Ausführungsform eines Leistungsverzweigungsgetriebes,
Fig. 2 ein Geschwindigkeitsdiagramm für das Leistungsverzweigungsgetriebe nach Fig. 1.
Fig. 3 eine Ansicht entsprechend Fig. 1 einer zweiten Ausführungsform eines Leistungsverzweigungsgetriebes,
Fig. 4 ein Geschwindigkeitsdiagramm für das Leistungsverzweigungsgetriebe nach Fig. 3,
Fig. 5 eine Ansicht entsprechend Fig. 1 einer dritten Ausführungsform eines Leistungsverzweigungsgetriebes.

Ein nicht näher dargestelltes Kraftfahrzeug, das durch eine Arbeitsmaschine - Traktor, Baumaschine -, ein Handlingfahrzeug - Telehandler, Stapler oder ein bspw. im Stop and Go Betrieb wirkendes Fahrzeug - Stadtbus, Zustellfahrzeug oder Kommunalfahrzeug - weist ein Leistungsverzweigungsgetriebe 1 mit einer von einer Brennkraftmaschine angetrieben Eingangswelle 2 auf. Das Leistungsverzweigungsgetriebe 1 ist mit mehreren Zweigen ZI, ZII und ZIII ausgestattet, wovon der erster Zweig I ein vier Gänge G1, G2, G3 und G4 umfassendes Lastschaltgetriebe 3 besitzt - Fig. 1 -. Der zweite Zweig II ist als Steuereinrichtung 4 ausgebildet, die unter Vermittlung einer den dritten Zweig III bildenden als Summierplanetengetriebe 5 ausgebildeten Getriebeeinheit mit einer Abtriebswelle 6 zusammenarbeitet.

Die Steuereinrichtung 4 ist in der Weise ausgebildet, dass beim Anfahrvorgang des Kraftfahrzeugs einerseits die Drehrichtung der Abtriebswelle 6 für Vorwärtsfahrt bzw. Rückwärtsfahrt veränderbar ist. Andererseits lässt sich beim Anfahrvorgang und geschalteten Gängen - G1, G2, G3 und G4 - die Abtriebswelle 6 stufenlos verstellen. Die Steuereinrichtung 4 wird durch eine Hydrostateinrichtung 7 gebildet, wobei auch denkbar ist für die Steuereinrichtung 4 einen Elektromotor zu verwenden.

Die Hydrostateinrichtung 7 besitzt eine eine Stelleinrichtung Se aufweisende Verstellpumpe 8 und einen Konstantmotor 9 (bei definierten Anforderungen kann der Konstantmotor auch ein Verstellmotor sein); letztere können zu einer kompakten und einfach zu montierenden Baueinheit 10 zusammengefasst sein. Die Verstellpumpe 8 wird von einem zwei Zahnräder 11 und 12 umfassenden Stirnradgetriebe 13 angetrieben, das mit der Eingangswelle 2 zusammenarbeitet. Dabei ist Zahnrad 11 mit der Eingangswelle 2 und Zahnrad 12 mit der einer ersten Welle 14 der Verstellpumpe 8 verbunden.

Der Konstantmotor 9 der Hydrostateinrichtung 7 treibt über eine zweite Welle 15 ein Sonnenrad 16 des drei Wellen umfassenden Summierplanetengetriebes 5 an. Ein Hohlrad 17 des Summierplanetengetriebes 5 wirkt mit einer lastschaltbaren Hohlradkupplung 18 zusammen, die an einem Gehäuse 19 befestigt ist. Das Hohlrad 17 ist mit einer Vorgelegewelle 20 des nach Art eines Doppelkupplungsgetriebes 21 ausgebildeten Lastschaltgetriebes 3 verbunden, welche Vorgelegewelle 20 Zahnräder 22, 23, 24 und 25 für die Gänge G1, G2, G3 und G4 trägt. Die Vorgelegewelle 20 ist als Hohlwelle 26 ausgeführt, in der die zweite Welle 15, die sich zwischen Konstantmotor 9 und Sonnenrad 16 des Summierplanetengetriebes 5 erstreckt, verläuft.

Die Eingangswelle 2 des Leistungsverzweigungsgetriebes 1 wirkt mittels einer ersten Schaltkupplung 27 und einer zweiten Schaltkupplung 28 des Doppelkupplungsgetriebes 21 zusammen. Hiervon ist die erste lastschaltbare Schaltkupplung 27 mit einer ersten Getriebewelle 29 und die zweite lastschaltbare Schaltkupplung 28 mit einer zweiten Getriebewelle 30 gekoppelt. Zur konstruktiven Vereinfachung ist die erste Getriebewelle 29 als Hohlwelle 31 gestaltet, die die zweite Getriebewelle 30 zumindest abschnittsweise umgibt. Auf der ersten Getriebewelle 29 und der zweiten Getriebewelle 30 sind Losräder 32, 33, 34 und 35 gelagert, wobei auf der ersten Getriebewelle 29 die Losräder 32 und 33 für die Gänge G1 und G3 gelagert sind; auf der zweiten Getriebewelle 30 die Losräder 34 und 35 für die Gänge G2 und G4. Zwischen den Losrädern 32 und 33 bzw. den Losrädern 34 und 35 sind Gleichlaufeinrichtungen 36 und 37 vorgesehen, die bei Zuschaltung der Gänge G1, G2, G3 und G4 wirksam werden. Die Gleichlaufeinrichtungen 36 und 37 können durch entsprechend ausgeführte Schaltkupplungen ersetzt werden.

Beim Anlassvorgang der auf das Leistungsverzweigungsgetriebes 1 einwirkenden und mit Konstantdrehzahl arbeitender Brennkraftmaschine sind die erste Schaltkupplung 27 und die zweite Schaltkupplung 28 des Doppelkupplungsgetriebes 21 geöffnet; ebenso die Hohlradkupplung 18. Über das Stirnradgetriebe 13 wird die Verstellpumpe 8 der Hydrostateinrichtung 7 entsprechend der Drehzahl der Brennkraftmaschine angetrieben. Die Stelleinrichtung Se der Verstellpumpe 8 ist auf einen Schwenkwinkel mit der Kennzeichnung N (=0) gestellt; es erfolgt keine Förderung von Hydraulikmedium zum Konstantmotor 9. Die zweite Welle 15 des Konstantmotors 9 steht still bzw. weist Drehzahl 0 auf. Durch Schließen der Hohlradkupplung 18 wird das Hohlrad 17 am Summierplanetengetriebe 5 mit dem Gehäuse 19 verbunden und der Kraftfluss zwischen Brennkraftmaschine und den Rädern des Kraftfahrzeugs geschlossen. Dabei wird die Drehzahl und die Drehrichtung der Abtriebswelle 6 allein durch die Drehzahl und Drehrichtung des Sonnenrads 16 des Summierplanetengetriebes 5 bestimmt. Unter dem Einfluss der Veränderung des geförderten Ölvolumens der Verstellpumpe 8 durch Verstellung des Schwenkwinkels der Stelleinrichtung Se wird der Konstantmotor 9 mit Hydraulikmedium versorgt, welcher Konstantmotor 9 das Sonnenrad 16 antreibt. Aus dem Stillstand des Kraftfahrzeugs - Ausgangsgröße des Anfahrvorgangs - wird besagtes Kraftfahrzeug rein hydrostatisch angetrieben. Aufgrund der Hydrostateinrichtung 7 besteht die Möglichkeit das Kraftfahrzeug in beide Fahrtrichtungen - Vorwärtsfahrt und Rückwärtsfahrt - in Abhängigkeit der gewählten Übersetzungsverhältnisse des Summierplanetengetriebes 5 und der Drehzahlauslegung der Hydrostateinrichtung 7 zu betreiben.

Nach dem Anfahrvorgang über die Hydrostateinrichtung 7 erfolgt ein Umschaltvorgang in den ersten Gang G1, wobei über die Gleichlaufeinrichtung 36 das Losrad 32 mit der ersten Getriebewelle 29 drehfest verbunden wird. In diesem Betriebszustand wird die Hohlradkupplung 19 geöffnet und die erste Schaltkupplung 27 wird überlappend geschlossen. Dadurch wird das Hohlrad 17 des Summierplanetengetriebes 5 mit der ersten Getriebewelle 29 verbunden und eine definierte Drehzahl erreicht. Während dieses Umschaltvorgangs wird durch anpassende Verstellung des Schwenkwinkels der Stelleinrichtung Se der Verstellpumpe 8 die Drehzahl und die Drehrichtung des Konstantmotors 9 permanent an die Drehzahländerung des Hohlrads 17 angepasst, und zwar mit dem Ergebnis, dass nach Beendigung des Umschaltvorgangs eine vergleichbare Getriebe- Gesamt-Übersetzung wie beim Antrieb über die Hydrostateinrichtung 7 vorliegt. In diesem Betriebszustand dreht sich das Sonnenrad 16 in Gegenrichtung zum Hohlrad 17. Hierbei ist erwähnenswert, dass durch Veränderung der Drehzahl des Sonnenrads 16 von Drehung entgegen der Drehrichtung des Hohlrads 17 und in gleicher Richtung des Hohlrads 16, und zwar jeweils bis zur maximalen Drehzahl die Übersetzung des Lastschaltgetriebes 1 stufenlos eingestellt werden kann.

Nach Erreichen der maximalen Geschwindigkeit im ersten Gang G1 dreht das Hohlrad 17 entsprechend derim Doppelkupplungsgetriebe 21 gewählten Übersetzungsstufe und das Sonnenrad 16 dreht in gleicher Richtung wie das Hohlrad 17 mit entsprechend hoher Drehzahl, und es erfolgt der Umschaltvorgang in den nächst höheren Gang mit folgendem Ablauf:
Gleichlaufbeginn des nächsten Gangs - G2, G3, G4 - durch Betätigung der Gleichlaufeinrichtungen 36 und 37 an einer der lastfreien ersten oder zweiten Getriebewellen 29 oder 30;
Schalten von einer der Getriebewellen - 29 oder 30 - auf die andere Getriebewelle - 29 oder 30 - durch überlappendes Öffnen und Schließen der Schaltkupplungen - 27 oder 28 - und gleichzeitiger Anpassung der Drehzahl des Konstantmotors 9, damit am Ende des Umschaltvorgangs wiederum ungefähr dieselbe Übersetzung wie vor dem Umschaltvorgang vorliegt;
Nachdem der Umschaltvorgang vollzogen ist, erfolgt die Veränderung des Getriebe-Übersetzungsverhältnisses durch Veränderung der Drehzahl des Konstantmotors 9.

Das Schalten etwaiger weiterer höherer Gänge bzw. das Schalten niederer Gänge erfolgt analog.

In Fig. 2 ist ein Geschwindigkeitsschaubild des Leistungsverzweigungsgetriebes 1 dargestellt, wobei auf der Abszisse 38 die Geschwindigkeit in km/h und auf der Ordinate 39 die Funktion des Hydrostatantriebs 7 alleine bzw. bei geschalteten Gängen G1, G2, G3 und G4 aufgetragen sind. Danach ist beim Anfahrvorgang des Kraftfahrzeugs die Hydrostateinrichtung 7 für Vorwärtsfahrt und Rückwärtsfahrt im Bereich von 0 km/h bis jeweils ca. 8 km/h allein stufenlos wirksam - horizontaler Balken BI -. Darüber hinaus arbeitet die Hydrostateinrichtung 7 in den Gängen G1, G2, G3 und G4 in Geschwindigkeitsbereichen gemäß den horizontalen Balken BII, III, BIV und BV d.h.: G1 von 2 bis 16 km/h, G2 von 12 bis 26 km/h, G3 von 22 bis 36 km/h und G4 von 34 bis 48 km/h.

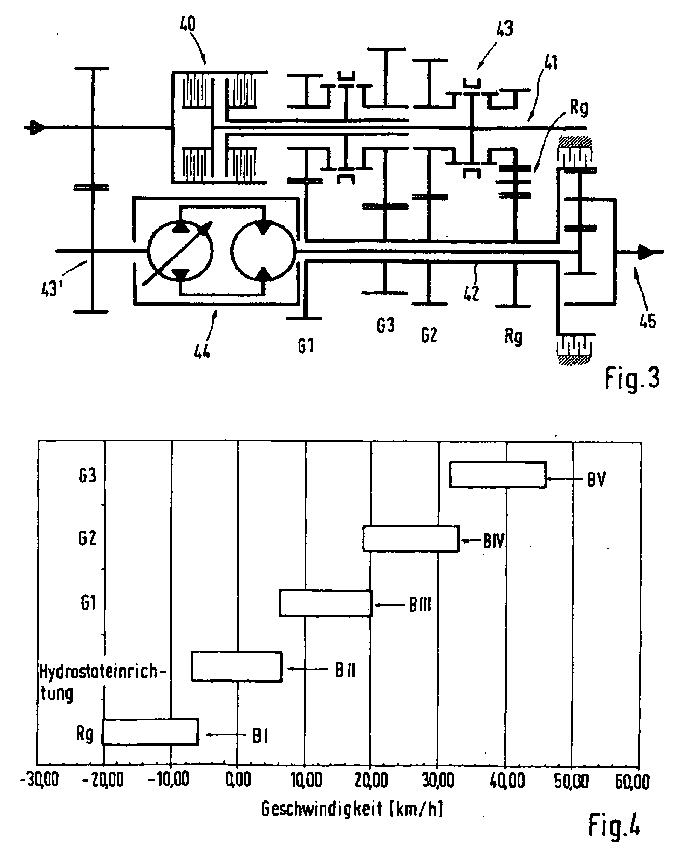

Nach Fig. 3 ist ein Leistungsverzweigungsgetriebe 40 prinzipiell wie das Leistungsverzweigungsgetriebe 1 gemäß Fig. 1 aufgebaut. Allerdings ist das Leistungsverzweigungsgetriebe 40 mit drei Gängen G1, G2 und G3 und einem mechanischen Rückwärtsgang Rg versehen, der zwischen einer zweiten Getriebewelle 41 und einer Vorgelegewelle 42 eines Doppelkupplungsgetriebes 43 angeordnet ist; eine Hydrostateinrichtung ist mit 44 und eine Abtriebswelle mit 45 bezeichnet. Aus dem Schaubild gemäß Fig. 4, das ähnlich dem Schaubild in Fig. 2 ist, geht hervor, dass im zugeschalteten Rückwärtsgang Rg mittels Hydrostateinrichtung 44 Geschwindigkeiten von 8 bis 20 km/h erzielbar sind - Balken BI -. Bei reinem Betrieb mit Hydrostatantrieb 45, der durch den Balken BII dargestellt ist, werden beim Anfahrvorgang Geschwindigkeiten von 0 bis 8 km/h, und zwar in Vorwärtsfahrt und Rückwärtsfahrt erreicht. Die Geschwindigkeitsbereiche für die Gänge G1, G2 und G3 werden durch die Balken BIII, BIV und BV verdeutlicht.

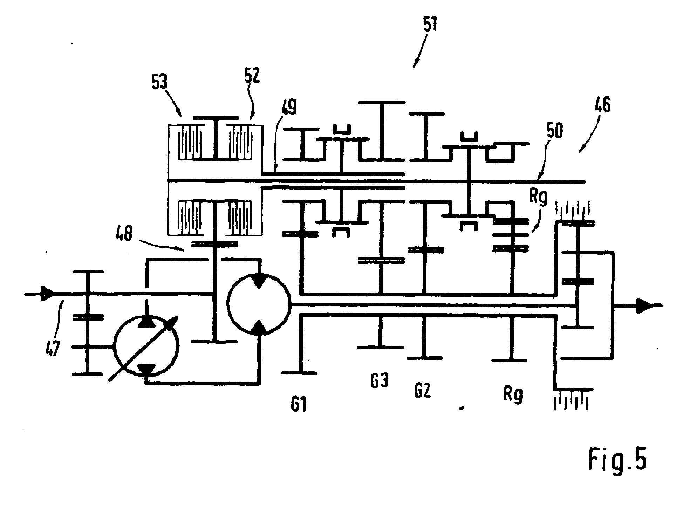

Die in Fig. 5 gezeigte Ausführungsform eines Leistungsverzweigungsgetriebes 46 weist eine Antriebswelle 47 auf, die über ein Stirnradgetriebe 48 mit einer ersten Getriebewelle 49 und einer zweiten Getriebewelle 50 eines Doppetkupptungsgetriebes 51 in Wirkverbindung steht. Schließlich umfasst das Doppelkupplungsgetriebe 51 eine erste Schaltkupplung 52 und eine zweite Schaltkupplung 53, die mit der ersten Getriebewelle 49 bzw. der zweiten Getriebewelle 50 zusammenarbeiten.

## Patentansprüche

1. Leistungsverzweigungsgetriebe (1, 40, 46) für Kraftfahrzeuge mit einer Brennkraftmaschine, die eine Eingangswelle (2, 47) des Leistungsverzweigungsgetriebes (1, 40, 46) antreibt, welches Leistungsverzweigungsgetriebe (1, 40, 46) mehrere wenigstens ein Lastschaltgetriebe (3, 43, 51) mit einer Anzahl von Gängen (G1, G2, G3, G4; G1, G2, G3, Rg) umfassende Zweige (ZI, ZII, ZIII) und eine Abtriebswelle (6, 45) aufweist,
wobei zumindest einer der Zweige (ZI, ZII oder ZIII) mit einer Steuereinrichtung (4) versehen ist, mit der beim Anfahrvorgang des Kraftfahrzeugs die Drehrichtung der Abtriebswelle (6, 45) veränderbar ist, wobei beim Anfahrvorgang und geschalteten Gängen des mit der Eingangswelle (2, 47) verbundenen Lastschaltgetriebes (3, 43, 51) über die Steuereinrichtung (4) die Drehzahl der Abtriebswelle (6, 45) stufenlos beeinflussbar ist,
**dadurch gekennzeichnet, dass**
die Eingangswelle (2, 47) mit einer ersten Schaltkupplung (27, 52) und einer zweiten Schaltkupplung (28, 53) eines Doppelkupplungsgetriebes (21, 43) zusammenwirkt, wovon die erste Schaltkupplung (27, 52) mit einer ersten Getriebewelle (29, 49) und die zweite Schaltkupplung (28, 53) mit einer zweiten Getriebewelle (30, 50) gekoppelt ist, auf welchen ersten und zweiten Getriebewellen (29,49 und 30, 50) Losräder (32, 33, 34 und 35) gelagert sind.

2. Leistungsverzweigungsgetriebe (1, 40,46) nach Anspruch 1,
**dadurch gekennzeichnet, dass**
das Lastschaltgetriebe (3, 43, 51) einen ersten Zweig (ZI) und die Steuereinrichtung (4) einen zweiten Zweig (ZII) bildet, welche Steuereinrichtung (4) mit einem dritten ein Summierplanetengetriebe (5) umfassenden Zweig (ZIII) zusammenarbeitet.

3. Leistungsverzweigungsgetriebe (1, 40, 46) nach einem der vorhergehenden Ansprüche,
**dadurch gekennzeichnet, dass**
die Steuereinrichtung (4) durch eine Hydrostateinrichtung (7; 44) gebildet wird.

4. Leistungsverzweigungsgetriebe (1, 40, 46) nach einem der vorhergehenden Ansprüche 1 oder 2
**dadurch gekennzeichnet, dass**
die Steuereinrichtung (4) durch einen Elektroantrieb gebildet wird.

5. Leistungsverzweigungsgetriebe (1, 40, 46) nach Anspruch 3,
**dadurch gekennzeichnet, dass**
die Hydrostateinrichtung (7; 44) eine Verstellpumpe (8) und einen Konstantmotor (9) besitzt.

6. Leistungsverzweigungsgetriebe (1, 40, 46) nach Anspruch 5,
**dadurch gekennzeichnet, dass**
die Verstellpumpe (8) und der Konstantmotor (9) der Hydrostateinrichtung (7; 44) zu einer Baueinheit (10) zusammengefasst sind.

7. Leistungsverzweigungsgetriebe (1, 40, 46) nach Anspruch 5 oder 6,
**dadurch gekennzeichnet, dass**
die Verstellpumpe (8) der Hydrostateinrichtung (7) über ein Stirnradgetriebe (13, 48) mit der Eingangswelle (2, 47) zusammenarbeitet.

8. Leistungsverzweigungsgetriebe (1, 40, 46) nach einem der vorhergehenden Ansprüche 6 bis 7,
**dadurch gekennzeichnet, dass**
der Konstantmotor (9) der Hydrostateinrichtung (7) über eine zweite Welle (15) ein Sonnenrad (16) des Summierplanetengetriebes (5) antreibt.

9. Leistungsverzweigungsgetriebe (1, 40, 46) nach einem der Ansprüche 2 bis 8,
**dadurch gekennzeichnet, dass**
das Summierplanetengetriebe (5) drei Wellen umfasst.

10. Leistungsverzweigungsgetriebe (1, 40, 46) nach einem der Ansprüche 2 bis 9,
**dadurch gekennzeichnet, dass**
ein Hohlrad (17) des Summierplanetengetriebes (5) mit einer schaltbaren Hohlradkupplung (18) zusammenarbeitet.

11. Leistungsverzweigungsgetriebe (1, 40, 46) nach Anspruch 10,
**dadurch gekennzeichnet, dass**
das Hohlrad (17) des Summierplanetengetriebes (5) mit einer Zahnräder (22, 23, 24 und 25) tragenden Vorgelegewelle (20, 42) des Lastschaltgetriebes (3, 43, 51) verbunden ist.

12. Leistungsverzweigungsgetriebe (1, 40, 46) nach einem der Ansprüche 10 oder 11,
**dadurch gekennzeichnet, dass**
die Vorgelegewelle (20, 42) des Lastschaltgetriebes (3, 43, 51) durch eine Hohlwelle (26) gebildet wird, in der die zweite Welle (15) zwischen Konstantmotor (9) und Sonnenrad (16) verläuft.

13. Leistungsverzweigungsgetriebe (1, 40, 46) nach einem der vorhergehenden Ansprüche
**dadurch gekennzeichnet, dass**
die erste Getriebewelle (29, 49) als Hohlwelle (31) ausgeführt ist, die die zweite Getriebewelle (30, 50) umgibt.

14. Leistungsverzweigungsgetriebe (1, 40, 46) nach einem der vorhergehenden Ansprüche
**dadurch gekennzeichnet, dass**
die ersten und zweiten Getriebewellen (29, 49 und 30, 50) mit Gleichlaufeinrichtungen (36 und 37) für die die Losräder (32 bis 35) versehen sind.

15. Leistungsverzweigungsgetriebe (1, 40, 46) nach einem der vorhergehenden Ansprüche
**dadurch gekennzeichnet, dass**
die ersten und die zweiten Getriebewellen (29, 49 und 30, 50) mit lastschaltbaren Kupplungen (27, 52 und 28, 53) für die losräder (32 bis 35) versehen sind.

16. Leistungsverzweigungsgetriebe (40, 46) nach einem der vorhergehenden Ansprüche
**dadurch gekennzeichnet, dass**
zwischen wenigstens der zweiten Getriebewelle (41) und der Vorgelegewelle (42) eine Rückwärtsgang (Rg) vorgesehen ist, mit dem die Drehrichtung der Vorgelegewelle (42) umkehrbar ist.

17. Leistungsverzweigungsgetriebe (1, 40, 46) nach einem der vorhergehenden Ansprüche 12 bis 18,
**dadurch gekennzeichnet, dass**
das Doppelkupplungsgetriebe (43) unter Vermittlung eines Stirnradgetriebes (48) mit der Antriebswelle (47) zusammenwirkt.

18. Verfahren zum Betrieb eines Leistungsvernveigungsgetriebes (1, 40, 46) für Kraftfahrzeuge mit einer Brennkraftmaschine, insbesondere nach einem oder mehreren der vorangehenden Ansprüche, die eine Eingangswelle (2, 47) des Leistungsverzweigungsgetriebes (1, 40, 46) antreibt, welches Leistungsverzweigungsgetriebe (1, 40, 46) mehrere wenigstens ein Lastschaltgetriebe (3, 43, 51) mit einer Anzahl von Gängen (G1, G2, G3, G4; G1, G2, G3, Rg) umfassende Zweige (ZI, ZII, ZIII) und eine Abtriebswelle (6, 45) aufweist,
wobei zumindest einer der Zweige (ZI, ZII oder ZIII) das Leistungsverzweigungsgetriebe (1, 40, 46) in der Weise steuert, dass beim Anfahrvorgang des Kraftfahrzeugs die Drehrichtung der Abtriebswelle (6, 45) veränderbarist, wobei beim Anfahrvorgang und geschalteten Gängen (G1, G2, G3 und G4) des mit der Eingangswelle (2, 47) verbundenen Lastschaltgetriebes (3, 43, 51) die Drehzahl der Abtriebswelle (6, 45) stufenlos beeinflussbar ist,
**dadurch gekennzeichnet, dass**
das Verfahren betrieben wird in dem Leistungsverzweigungsgetriebe wobei
die Eingangswelle (2, 47) mit einer ersten Schaltkupplung (27, 52) und einer zweiten Schaltkupplung (28, 53) eines Doppelkupplungsgetriebes (21, 43) zusammenwirkt, wovon die erste Schaltkupplung (27, 52) mit einer ersten Getriebewelle (29, 49) und die zweite Schaltkupplung (28, 53) mit einer zweiten Getriebewelle (30, 50) gekoppelt ist, auf welchen ersten und zweiten Getriebewellen (29, 49 und 30, 50) Losräder (32, 33, 34 und 35) gelagert sind.

## Claims

1. Power branching transmission (1, 40, 46) for motor vehicles having an internal-combustion engine, which drives an input shaft (2, 47) of the power branching transmission (1, 40, 46), said power branching transmission (1, 40, 46) has a plurality of transmission branches (ZI, ZII, ZIII) comprising at least one power shift transmission (3, 43, 51) with a plurality of gears (G1, G2, G3, G4; G1, G2, G3, Rg) and an output shaft (6, 45),
wherein at least one of the branches (ZI, ZII or ZIII) is equipped with a control device (4) operable to change rotational directions of the output shaft (6, 45) during starting operation of the motor vehicle,
wherein the control device (4) is operable to continuously influence the rotational speed of the output shaft (6, 45) during the starting operation and shifted gears of the power shift transmission (3, 43, 51) connected with the input shaft (2, 47),
**characterized in that**
the input shaft (2, 47) cooperates with a first shifting clutch (27, 52) and a second shifting clutch (28, 53) of a double clutch transmission (21, 43), wherein the first shifting clutch (27, 52) is coupled with a first gear shaft (29, 49) and the second shifting clutch (28, 53) is coupled with a second gear shaft (30, 50), on which first and second gear shafts (29, 49 and 30, 50), loose wheels (32, 33, 34, and 35) are mounted.

2. Power branching transmission (1, 40, 46) according to claim 1,
**characterized in that**
the power shift transmission (3, 43, 51) forms a first transmission branch (ZI) and the control device (4) forms a second transmission branch (ZII), which control device (4) cooperates with a transmission branch (ZIII) comprising a compound planetary transmission (5).

3. Power branching transmission (1, 40, 46) according to any one of the preceding claims,
**characterized in that**
the control device (4) is formed by a hydrostatic device (7; 44).

4. Power branching transmission (1, 40, 46) according to any one of the preceding claims 1 or 2,
**characterized in that**
the control device (4) is formed by an electric drive.

5. Power branching transmission (1, 40, 46) according to claim 3,
**characterized in that**
the hydrostatic device (7; 44) has a variable-displacement pump (8) and a fixed-displacement motor (9).

6. Power branching transmission (1, 40, 46) according to claim 5,
**characterized in that**
the variable-displacement pump (8) and the fixed-displacement motor (9) of the hydrostatic device (7; 44) are combined to form a constructional unit (10).

7. Power branching transmission (1, 40, 46) according to claim 5 or 6,
**characterized in that**
the variable-displacement pump (8) of the hydrostatic device (7) cooperates with the input shaft (2, 47) by way of a spur gear system (13, 48).

8. Power branching transmission (1, 40, 46) according to any one of the preceding claims 6 to 7,
**characterized in that**
the fixed-displacement motor (9) of the hydrostatic device (7) drives a sun gear (16) of the compound planetary transmission (5) by way of a second shaft (15).

9. Power branching transmission (1, 40, 46) according to any one of the claims 2 to 8,
**characterized in that**
the compound planetary transmission (5) comprises three shafts.

10. Power branching transmission (1, 40, 46) according to any one of the claims 2 to 9,
**characterized in that**
a ring gear (17) of the compound planetary transmission (5) cooperates with a shiftable ring gear clutch (18).

11. Power branching transmission (1, 40, 46) according to claim 10,
**characterized in that**
the ring gear (17) of the compound planetary transmission (5) is connected with a countershaft (20, 42) carrying gear wheels (22, 23, 24, and 25) of the power shift transmission (3, 43, 51).

12. Power branching transmission (1, 40, 46) according to any one of the claims 10 or 11,
**characterized in that**
the countershaft (20, 42) of the power shift transmission (3, 43, 51) is formed by a hollow shaft (26), wherein the second shaft (15) extends between fixed-displacement motor (9) and sun gear (16).

13. Power branching transmission (1, 40, 46) according to any one of the preceding claims, **characterized in that**
the first gear shaft (29, 49) is constructed as a hollow shaft (31), which surrounds the second gear shaft (30, 50).

14. Power branching transmission (1, 40, 46) according to any one of the preceding claims, **characterized in that**
the first and second gear shafts (29, 49 and 30, 50) are provided with synchronizing devices (36 and 37) for the loose wheels (32 to 35).

15. Power branching transmission (1, 40, 46) according to any one of the preceding claims, **characterized in that**
the first and the second gear shafts (29, 49 and 30, 50) are provided with power-shiftable clutches (27, 52 and 28, 53) for the loose wheels (32 to 35).

16. Power branching transmission (40, 46) according to any one of the preceding claims,
**characterized in that**
between at least the second gear shaft (41) and the countershaft (42), a reverse gear (Rg) is provided, by means of which the rotating direction of the countershaft (42) can be reversed.

17. Power branching transmission (1, 40, 46) according to any one of the preceding claims 12 to 18,
**characterized in that**
the double clutch transmission (43) cooperates with the drive shaft (47) by means of a spur gear system (48).

18. Method of operating a power branching transmission (1, 40, 46) for motor vehicles having an internal-combustion engine, especially according to one or a plurality of the preceding claims, which drives the transmission input shaft (2, 47) of the power branching transmission (1, 40, 46), said power branching transmission (1, 40, 46) has a plurality of transmission branches (ZI, ZII, ZIII) comprising at least one power shift transmission (3, 43, 51) with a plurality of gears (G1, G2, G3, G4; G1, G2, G3, Rg) and an output shaft (6, 45),
wherein at least one of the branches (ZI, ZII or ZIII) controls the power branching transmission (1, 40, 46) in such a manner that, during the starting operation of the motor vehicle, the rotating direction of the output shaft (6, 45) can be changed, wherein the rotational speed of the output shaft (6, 45) can be continuously influenced during starting operation and shifted gears (G1, G2, G3, G4) of the power shift transmission (3, 43, 51) connected with the input shaft (2, 47),
**characterized in that**
the method is operated in the power branching transmission, wherein the input shaft (2, 47) cooperates with a first shifting clutch (27, 52) and a second shifting clutch (28, 53) of a double clutch transmission (21, 43), wherein the first shifting clutch (27, 52) is coupled with a first gear shaft (29, 49) and the second shifting clutch (28, 53) is coupled with a second gear shaft (30, 50), on which first and second gear shafts (29, 49 and 30, 50), loose wheels (32, 33, 34, and 35) are mounted.

## Revendications

1. Transmission à dérivation de puissance (1, 40, 46) pour des véhicules automobiles avec un moteur à combustion qui entraîne un arbre d'entrée (2, 47) de la transmission à dérivation de puissance (1, 40, 46), cette transmission à dérivation de puissance (1, 40, 46) comprenant plusieurs embranchements (ZI, ZII, ZIII) comprenant au moins une transmission à enclenchement sous charge (3, 43, 51) avec une pluralité de rapports (G1, G2, G3, G4; G1, G2, G3, Rg) et un arbre de sortie (6, 45),
au moins un des embranchements (ZI, ZII ou ZIII) étant muni à un dispositif de commande (4) grâce auquel le sens de rotation de l'arbre de sortie (6, 45) est modifiable lors du processus de démarrage du véhicule automobile, la vitesse de rotation de l'arbre de sortie (6, 45) étant modifiable de manière progressive lors du processus de démarrage et lorsque des rapports sont enclenchés sur la transmission à enclenchement sous charge (3, 43, 51) reliée à l'arbre d'entrée (2, 47), par l'intermédiaire du dispositif de commande (4),
**caractérisé en ce que**
l'arbre d'entrée (2, 47) interagit avec un premier embrayage (27, 52) et un deuxième embrayage (28, 53) d'une transmission à double embrayage (21, 43), dont le premier embrayage (27, 52) est couplé à un premier arbre de transmission (29, 49) et le deuxième embrayage (28, 53) est couplé à un deuxième arbre de transmission (30, 50), des roues indépendantes (32, 33, 34 et 35) étant disposées sur ces premier et deuxième arbres de transmission (29, 49 et 30, 50).

2. Transmission à dérivation de puissance (1, 40, 46) selon la revendication 1,
**caractérisée en ce que**
la transmission à enclenchement sous charge (3, 43, 51) forme un premier embranchement (ZI) et le dispositif de commande (4) forme un deuxième embranchement (ZII), le dispositif de commande (4) interagissant avec un troisième embranchement (ZIII) comprenant un train épicycloïdal d'addition (5).

3. Transmission à dérivation de puissance (1, 40, 46) selon l'une des revendications précédentes,
**caractérisée en ce que**
le dispositif de commande (4) est constitué d'un dispositif hydrostatique (7; 44).

4. Transmission à dérivation de puissance (1, 40, 46) selon l'une des revendications précédentes 1 ou 2,
**caractérisée en ce que**
le dispositif de commande (4) est constitué d'un dispositif d'entraînement électrique.

5. Transmission à dérivation de puissance (1, 40, 46) selon la revendication 3,
**caractérisée en ce que**
le dispositif hydrostatique (7; 44) comprend une pompe à débit variable (8) et un moteur à cylindrée constante (9).

6. Transmission à dérivation de puissance (1, 40, 46) selon la revendication 5,
**caractérisée en ce que**
la pompe à débit variable (8) et le moteur à cylindrée constante (9) du dispositif hydrostatique (7; 44) sont regroupés en un unité de construction (10).

7. Transmission à dérivation de puissance (1, 40, 46) selon la revendication 5 ou 6,
**caractérisée en ce que**
la pompe à débit variable (8) du dispositif hydrostatique (7) interagit avec l'arbre d'entrée (2, 47) par l'intermédiaire d'une transmission à engrenage (13, 48).

8. Transmission à dérivation de puissance (1, 40, 46) selon l'une des revendications précédentes 6 à 7,
**caractérisée en ce que**
le moteur à cylindrée constante (9) du dispositif hydrostatique (7) entraîne une roue planétaire (16) du train épicycloïdal d'addition (5) par l'intermédiaire d'un deuxième arbre (15).

9. Transmission à dérivation de puissance (1, 40, 46) selon l'une des revendications précédentes 2 à 8,
**caractérisée en ce que**
le train épicycloïdal d'addition (5) comprend trois arbres.

10. Transmission à dérivation de puissance (1, 40, 46) selon l'une des revendications 2 à 9,
**caractérisée en ce que**
une couronne (17) du train épicycloïdal d'addition (5) interagit avec un embrayage à couronne (18).

11. Transmission à dérivation de puissance (1, 40, 46) selon la revendication 10,
**caractérisée en ce que**
la couronne (17) du train épicycloïdal d'addition (5) est reliée à un arbre de renvoi (20, 42) de la transmission à enclenchement sous charge (3, 43, 51), comportant des roues dentées (22, 23, 24 et 25).

12. Transmission à dérivation de puissance (1, 40, 46) selon l'une des revendications 10 ou 11,
**caractérisée en ce que**
l'arbre de renvoi (20, 42) de la transmission à enclenchement sous charge (3, 43, 51) est constitué d'un arbre creux (26) dans lequel le deuxième arbre (15) se trouve entre le moteur à cylindrée constante (9) et la roue planétaire (16).

13. Transmission à dérivation de puissance (1, 40, 46) selon l'une des revendications précédentes,
**caractérisée en ce que**
le premier arbre de transmission (29, 49) est conçu comme un arbre creux (31) qui entoure le deuxième arbre de transmission (30, 50).

14. Transmission à dérivation de puissance (1, 40, 46) selon l'une des revendications précédentes,
**caractérisée en ce que**
le premier et le deuxième arbres de transmission (29, 49 et 30, 50) sont munis de dispositifs synchrones (36 et 37) pour les roues indépendantes (32 à 35).

15. Transmission à dérivation de puissance (1, 40, 46) selon l'une des revendications précédentes,
**caractérisée en ce que**
le premier et le deuxième arbres de transmission (29, 49 et 30, 50) sont munis d'embrayages à enclenchement sous charge (27, 52 et 28, 53) pour les roues indépendantes (32 à 35).

16. Transmission à dérivation de puissance (40, 46) selon l'une des revendications précédentes,
**caractérisée en ce que**
entre au moins le deuxième arbre de transmission (41) et l'arbre de renvoi (42) se trouve un rapport de recul (Rg) grâce auquel le sens de rotation de l'arbre de renvoi (42) peut être inversé.

17. Transmission à dérivation de puissance (1, 40, 46) selon l'une des revendications précédentes 12 à 18,
**caractérisée en ce que**
la transmission à double embrayage (43) interagit avec l'arbre d'entraînement (47) par l'intermédiaire d'une transmission à engrenage (48).

18. Procédé d'utilisation d'une transmission à dérivation de puissance (1, 40, 46) pour des véhicules automobiles avec un moteur à combustion, notamment selon une ou plusieurs des revendications précédentes, qui entraîne un arbre d'entrée (2, 47) de la transmission à dérivation de puissance (1, 40, 46), cette transmission à dérivation de puissance (1, 40, 46) comprenant plusieurs embranchements (ZI, ZII, ZIII) comprenant au moins une transmission à enclenchement sous charge (3, 43, 51) avec une pluralité de rapports (G1, G2, G3, G4; G1, G2, G3, Rg) et un arbre de sortie (6, 45),
au moins un des embranchements (ZI, ZII, ZIII) contrôlant la transmission à dérivation de puissance (1, 40, 46) de façon à ce que, lors du processus de démarrage du véhicule automobile, le sens de rotation de l'arbre de sortie (6, 45) soit modifiable, la vitesse de rotation de l'arbre de sortie (6, 45) étant modifiable de manière progressive lors du processus de démarrage et lorsque des rapports (G1, G2, G3 et G4) sont enclenchés sur la transmission à enclenchement sous charge (3, 43, 51) reliée à l'arbre d'entrée (2, 47),
**caractérisé en ce que**
le procédé est utilisé dans la transmission à dérivation de puissance,
l'arbre d'entrée (2, 47) interagissant avec un premier embrayage (27, 52) et un deuxième embrayage (28, 53) d'une transmission à double embrayage (21, 43), dont le premier embrayage (27, 52) est couplé à un premier arbre de transmission (29, 49) et le deuxième embrayage (28, 53) est couplé à un deuxième arbre de transmission (30, 50), des roues indépendantes (32, 33, 34 et 35) étant disposées sur ces premier et deuxième arbres de transmission (29, 49 et 30, 50).
